# EUROPEAN PATENT SPECIFICATION

(11) **EP 1 907 948 B1**
(45) Date of publication and mention of the grant of the patent: **19.10.2011**
(21) Application number: 06757993.8
(22) Date of filing: 26.06.2006
(51) Int. Cl.: G06F 17/30, G06F 17/21, G06F 17/22

(54) **METHOD AND ARRANGEMENT IN A DISPLAY SYSTEM**
VERFAHREN UND ANORDNUNG IN EINEM DISPLAY-SYSTEM
AGENCEMENT SITUE DANS UN SYSTEME D'AFFICHAGE ET METHODE ASSOCIEE

(30) Priority: 20.07.2005 SE 0501710
(43) Date of publication of application: 09.04.2008
(73) Proprietor: Obigo Korea Co., Ltd., Gangnam-gu Seoul (KR)
(72) Inventor: ALMBLADH, Johan, S-222 21 Lund (SE)
(74) Representative: Greene, Simon Kenneth
(86) International application number: PCT/SE2006/000774
(87) International publication number: WO 2007/011277

(56) References cited:
- WO-A2-03/088035
- US-A1- 2004 148 571
- US-A1- 2004 148 571
- US-A1- 2005 071 364
- US-B1- 6 635 089
- Karnaze C: "Table Reflow Internals - Tech Talk" 5 August 2002 (2002-08-05), XP002578991 Retrieved from the Internet: URL:http://lxr.mozilla.org/seamonkey/sourc e/layout/doc/table_reflow_slides.html> [retrieved on 2010-04-20]
- Anonymous: "An Overview of WebCore" 26 March 2005 (2005-03-26), XP002578992 Retrieved from the Internet: URL:http://web.archive.org/web/20050326142 041/http://weblogs.mozillazine.org/hyatt/W ebCore/chapter2.html> [retrieved on 2010-04-21]
- GESSNER R: "Netscape's Gecko : The Next-Generation Layout Engine" INTERNET CITATION 1999, XP002166474 Retrieved from the Internet: URL:http://webtechniques.com/archives/1999 /03/gessner/> [retrieved on 2001-05-04]
- Waterson C: "Gecko Overview" 10 June 2002 (2002-06-10), XP002578993 Retrieved from the Internet: URL:http://www.mozilla.org/newlayout/doc/g ecko-overview.ppt> [retrieved on 2010-04-21]

## Description

### Field of the Invention

The present invention relates to a method in rendering of a compound graphical object described by a markup language document according to the preamble of claims 1 and 11, an arrangement according to the preamble to claim 8 and 12, a computer program according to the preamble to claim 9 and 13, and a digital storage medium according to claim 10 and 14.

### Background art

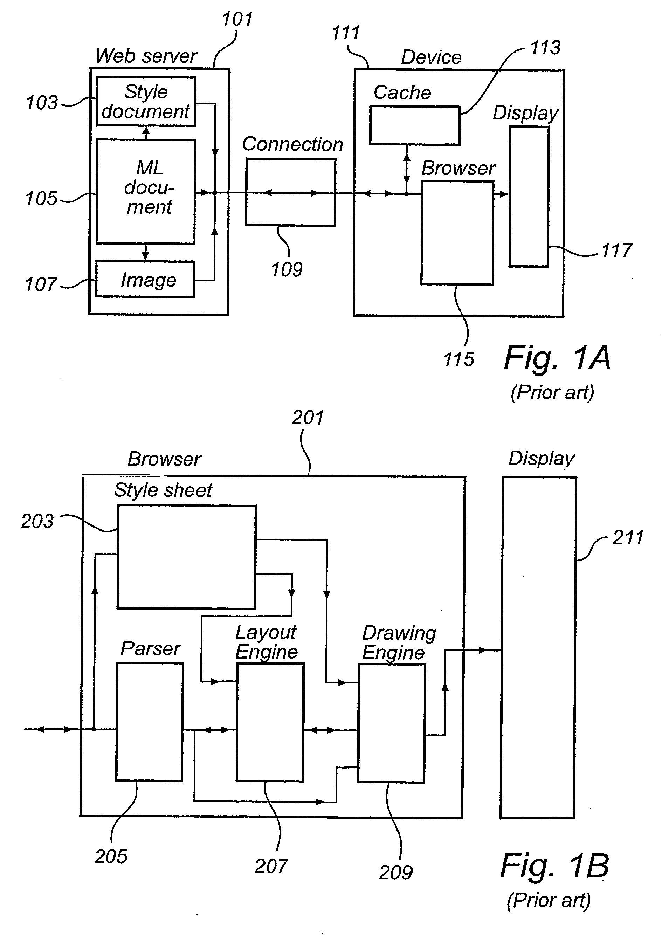

Compound graphical objects like for example web pages are often defined by a document, 105 of Fig. 1A, written in some markup language like for example HTML. When a user is surfing the Internet using some device, 111, like for example a computer or a cellular phone, the device, 111, retrieves the corresponding documents from some web server, 101. A markup language document, 105, may not contain all the content of the web page, i.e. the ml document, 105, may in some way refer to other content like an image, 107, that has to be retrieved separately from a web server, 101, or may be found in some cache, 113, on the device, 111. The device, 111, has to translate the ml document, 105, as well as the other content it may refer to, into a compound graphical object that can be displayed to the user on a display, 117.

The user wishes to look at a compound graphical object that looks like it was intended to. To achieve that, the device, 111, has to perform the layout of the compound graphical object according to at least the grammar of the markup language. The device, 111, often also uses additional style information that may be given in a style sheet, 203 of Fig. 1B. One standard for style sheets is CSS, Cascading Style Sheets. Parts of the style sheet, 203, may be user defined and thus the same for a number of displayed web pages while other parts of the style sheet, 203, may be defined by the author as part of the ml document, 105, or by a separate style document, 103, referred to by the ml document, 105.

The task of translating the ml document, 105, into a compound graphical object to be displayed to the user is often performed by a so called browser, (115, 201), that is implemented on the device, 111. The browser, (115, 201), is often implemented as a computer program running on some processor of the device, 111. However, parts of the methods of the browser, (115, 201), may be accelerated using special hardware of the device, 111, like for example a graphical processing unit.

Web pages are getting more and more complicated in their layout. They may contain animated images and embedded videos. They may also have a layout that changes over time due to that the original ml document, 105, is changed over time by for example a script that is run on the device, 111. Web pages are also being retrieved over connections, 109, like for example cellular phone connections, that only provide a low data rate, resulting in that content referred to by the ml document, 105, may arrive at the device, 111, much later than the ml document, 105, itself.

Late arrivals of content, changes in the style sheet, 203, and changed ml documents, 105, may all result in the need for re-translating the document, 105. Since the web page may have a quite complicated layout, since the needs for re-translations may be quite frequent and since the device, 111, may have a limited computational power, it is useful if the translation method of the browser, (115, 201), can perform computationally efficient translations and re-translations of markup language documents.

One way of translating the ml document, 105, into a compound graphical object displayed on the device, 111, may be to perform the translation in three sequential steps: parsing, rendering and drawing.

A parsing step may be performed by a parser, 205, that parses the document, according to the grammar of the markup language, to be represented by a markup language (ml) tree which is more or less equivalent to the ml document, 105. The markup language tree, which may be stored in the parser, 205, or the layout engine, 207, may follow a DOM (Document Object Model) standard.

A rendering step may be performed by a layout engine, 207, that refers to the ml tree and the geometrical information of a style sheet, 203, for input. Some examples of geometrical information are text font/size, margin, border, padding, widths, heights, and left-to-right/right-to-left rendering. The layout engine, 207, calculates a suitable geometrical layout of the individual graphical objects of the compound graphical object as well as the geometrical relations between graphical objects like, for example, their relative positions. The resulting geometrical layout information for the individual graphical object is a box which is the perimeter of the graphical object including margins, borders and padding. The geometrical layout information on the box, which may be {width, height, the position of the upper left corner of the box relative to a parent box, and a baseline} may also be accompanied by an identification number of the corresponding node of the markup language tree. The geometrical layout information is stored in a box tree, which may also be called a frame tree. There may be several box trees which may be stored in the layout engine, 207, and/or the drawing engine, 209. The box tree which is the input for the drawing engine, 209, may be called an output box tree. The work performed by a rendering step may also be referred to as flowing and re-flowing or rendering and re-rendering.

A drawing step may be performed by a drawing engine, 209, in close cooperation with the hardware of the device, 111, and refer to the markup language tree, an output box tree and the non-geometrical parts of a style sheet, 203, for input. Examples of such non-geometrical information may be color, background color, border style, and text decoration like for example underline or flashing.

The need for a computationally efficient translation method of the browser (115, 201) can, at least partly, be accomplished by a layout engine, 207, that can perform computationally efficient layouts in order to flow and re-flow the ml tree into an output box tree.

The layout engines of today are often complicated in their logic. The main reason is that they work from a markup language document perspective. They traverse the ml tree and use complicated logic and rules to handle how the layout of one node of the ml tree depends on the layout of other nodes of the tree. When the display type is a block, the logic and rules are quite easy. For other more refined display types like inline, table, and inline-table, the rules may be relatively simple for the dependence on the children of a node but get more complicated regarding the descendants of the node that are located further down in the ml tree.

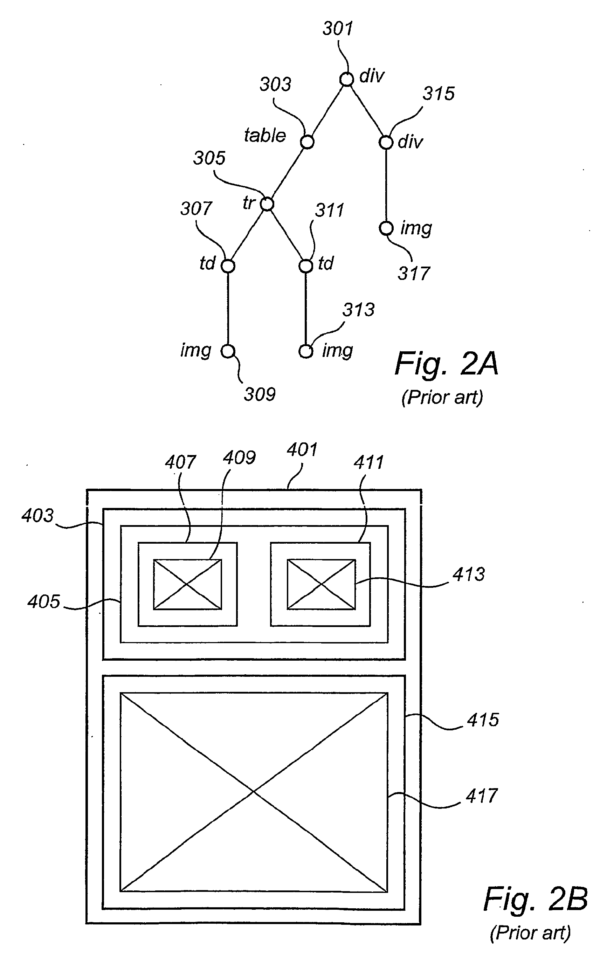

In Fig. 2A, an example of a simplified ml tree corresponding to a rather simple ml document is given.

In Fig. 2B, a simplified layout corresponding to the simplified ml tree of Fig. 2A is given. The boxes corresponding to the perimeter of each individual graphical object are shown, but their details are not. The three images are marked with crossed lines.

When the rules and logic for flowing an ml document are complicated then the rules and logic for re-flowing the same document in a computationally efficient way is probably even more complicated and maybe even too hard to implement. Therefore there is a need for a simplified browser that uses a simplified layout engine which still allows for refined display types.

The anonymous article "An overview of WebCore" taken from http:/weblogs.mozillazine.org/hyatt/WebCore/chapter2.html as archived at http://web.archive.org in the version of 26 March 2005 teaches WebCore, which has an adapted layer and a layout engine which carries out a number of steps including Stylesheet parsing/construction which are briefly explained.

A layout engine is taught by "Netscape's Gecko The Next-Generation Layout Engine", Rick Gessner, http://webtechniques.com/archives/1999/03/gessner.

### Summary of the invention

An object of the present invention is to wholly or partly remedy the above-mentioned problems.

This object is achieved by a method for rendering a compound graphical according to claim 1, an arrangement according to claim 7, a computer program according to claim 8, and a digital storage medium according to claim 9.

According to a first aspect the invention concerns a method in a display system, having a display, for rendering a compound graphical object, described by a markup language, ML, document and a style sheet, and comprising primitive content, wherein, by means of a parser, a structured document, corresponding to the ML document, is created, the structured document defining an hierarchical relationship between pieces of primitive content in the ML document as a tree of inter-related nodes, the tree having a top node, and, by means of a layout engine and based on the structured document and said style sheet, a geometric document is created, the geometric document defining areas on said display to be covered by the pieces of primitive content, which jointly form the compound graphical object, wherein the layout engine, in a metrics defining process, recursively traverses the tree of the structured document, such that, based on said style sheet and properties for the nodes, metrics for the nodes is defined, wherein the layout engine tests the nodes to determine whether a current node has a layout surface competing, LSC, property, if the current node has an LSC property, the metrics defining process is interrupted, the layout engine, in an LSC job process, recursively traverses the sub-tree of the current node to define metrics ranges for nodes in the sub tree, and the metrics defining process is resumed, wherein the metrics ranges for the nodes in the sub-tree are used.

The structured document may be a document object model, DOM, tree, the geometric document may be a box tree, and the LSC property is a min/max property. The metrics ranges correspond to min/max information.

The layout engine may, in the metrics defining process, traverse the tree of the structured document starting from the top node using a first main loop and a second main loop, wherein, in the first main loop an enter operation is carried out for a node, whereby the metrics for that node may be adjusted, and the layout engine proceeds to a child node, and in the second main loop the layout engine gets content for a node, proceeds to its parent node, and adds the content to the parent node. When the layout engine gets the content, the content may be temporarily stored.

The layout engine may, in a subsequent re-rendering process where content corresponding to a target node in the structured document tree is to be updated, create and store a trace from the target node to the top node; and may, in a first re-rendering loop, follow the trace from the top node to the target node and carry out enter operations for nodes on the trace, repeat the metrics defining process, with the target node acting as a top node; and follow the trace from the target node to the top node, while adding content of child nodes on the trace to their parent nodes.

According to a second aspect, the invention relates to an arrangement in a display system, having a display, for rendering a compound graphical object. This arrangement corresponds to the above mentioned method. Generally the arrangement is thus adapted to, and comprises means such as software and/or hardware for, carrying out the steps of the method. The arrangement may be varied in accordance with the method.

According to a third aspect, the invention relates to a computer program for rendering, in a display system, having a display, a compound graphical object. This computer program corresponds to the above mentioned method. Generally the computer program thus comprises instructions for carrying out the steps of the method. The computer program may be varied in accordance with the method.

According to a fourth aspect, the invention concerns a digital storage medium comprising such a computer program.

### Brief description of the Drawings

Fig. 1A shows an example of a device comprising a browser and a display and how the device may communicate with a web server comprising a markup language document using a connection.
Fig. 1B shows an example of an internal layout of a browser of the device of Fig. 1A.
Fig. 2A shows an example of a simplified ml tree corresponding to a rather simple ml document.
Fig. 2B shows a simplified layout corresponding to the simplified ml tree of Fig. 2A. The boxes corresponding to the perimeter of each individual graphical object are shown, but their details are not. The three images are marked with crossed lines.
Fig. 3A shows an example of a simplified ml tree corresponding to a rather simple ml document. Compared to Fig. 2A, extra anonymous blocks have been inserted at nodes 509 and 515.
Fig. 3B shows a simplified layout corresponding to the simplified ml tree of Fig. 3A. Only the boxes corresponding to each individual graphical object are shown. The boxes corresponding to the anonymous blocks of Fig. 3A have dashed lines.
Fig. 4 schematically shows a rendering method according to the invention.
Fig. 5A shows the first part of a table describing some of the steps and the data when a rendering method according to Fig. 4 is applied to the ml tree of 3A.
Fig. 5B shows the second part of a table describing some of the steps and the data when a rendering method according to Fig. 4 is applied to the ml tree of 3A.
Fig. 6 schematically shows a min/max job method according to the invention.
Fig. 7 schematically shows a method for re-rendering according to an embodiment of the invention.

### Description of Preferred Embodiments

The invention relates to a layout engine and its ability to perform computationally efficient flows (renderings) and re-flows (re-renderings) of an ml tree.

When rendering an ml tree into a box tree, a layout engine according to the invention may use at least one rendering controller, (RCR) at least one composing renderer and at least one primitive renderer.

The invention relates to rendering from a content perspective. The following principles, which will be explained in more detail in examples below, may be applied:
Two new generic content classes - rendered content and min/max content respectively - may be used by the layout engine. Rendered content may be a box tree of an arbitrary size, while min/max content may consist of data describing the minimum and maximum possible width of some graphical object.

A number of composing operations like Ccompose_Enter_Dcontent, Ccompose_Leave_Dcontent, and Ccompose_Add_Dcontent, may be defined for Ccompose being any of a set of composing types combined with Dcontent being any of the two content classes. For the present invention, the composing types do not have to be the same as the display types allowed by the layout engine. For the display type Table, more than one composing type may be needed like described in an example below. The layout engine according to the present invention is capable of performing layout according to more complicated display types like inline table by nested calls of some of the more simple composing operation. For example, the display type of inline table is performed by nested use of the inline composition operations and the table composition operations.

Primitive operations like Etype_Get_Dcontent, where Dcontent can be any of the two content classes, may be defined for Etype being any of the possible primitive content types like for example Image and Text. Since the primitive operations do not compose content there is no need for single Add operations. Therefore there is no need for the RCR to call any separate Enter, Add or Leave operations. A Get operation corresponding to Enter, Add and Leave operations performed in sequence for primitive content may therefore be sufficient for a layout engine according to the present invention. The at least one primitive renderer may render, for example, text data from a node of the ml tree into rendered content and images from data that was retrieved according to a uniform resource locator given in a node of the ml tree into rendered content.

The composing operations and the primitive operations are performed by the at least one composing renderer and the at least one primitive renderer respectively, but the operations are called by the at least one RCR.

The RCR may be capable of performing so called depth-first traversals of the ml tree, or of some of its subtrees. In order to allow for re-use during re-flows, the RCR may insert extra anonymous blocks in for example table cells or such insertions may have been made before the RCR starts to traverse. These anonymous blocks preferably have their margins, borders and paddings set to zero. In a preferred example of the invention the RCR can control "everything", i.e. "there is no logic going beyond two depths" in the at least one composing renderer. In such a preferred example, re-translating can be easily done, since the RCR can provide shortcuts that result in improvements in computational efficiency and/or simplified logic for re-flows.

The RCR may be capable of performing three kinds of jobs. One kind is ordinary rendering, which can be performed when the RCR knows enough of the layout to provide so called metrics for the composing operations. Each composing operation modifies the metrics according to, for example its margin, border and padding parameters of the style sheet. Metrics thus propagate down from the top of an ml tree or subtree. Another kind of job is min/max rendering, which is performed when the RCR needs min/max information in order to find out suitable metrics. Min/max information may be necessary when the ml tree contains display types like, for example, table, inline block, inline table, and float with auto width. When min/max information is needed at the top of an ml tree or subtree, the need propagates from the top and the requested min/max information is provided from the bottom. The RCR is in control of the calls of the operations involved. The min/max data is provided as a special content class, but the method of a min/max job looks similar to the method of an ordinary rendering job. A third kind of job is re-rendering, which is similar to ordinary rendering, but faster since rendered content may be re-used. Re-rendering jobs may start ordinary rendering jobs and may also detect the need for additional re-rendering jobs.

An appropriate Ccompose_Enter_Dcontent operation is called when the RCR enters a new specific node. An Enter operation results in internal initializations of an instance of the composing renderer that implements that composing operation.

The corresponding Ccompose_Leave_Dcontent operation is called by the RCR when it leaves the specific node. The result of a Leave operation is Dcontent.

The Ccompose_Add_Dcontent operation is called when the RCR directs the output from a Leave operation of a specific node to the parent of that specific node. The result of an Add operation is that Dcontent from the child node is added, according to the rules of Ccompose, to the composing renderer that is in the process of rendering the Dcontent of the parent.

The calculations needed for min/max rendering are, at each level of the ml tree, performed by the at least one composing renderer. The calculations, meaning that the min and max values of each child node of the specific node are processed according to the rules of that composing type and resulting in new composed min/max information, are preferably performed during the Ccompose_Leave_minmax operation. The min and max values of each child node are preferably also stored in the ml tree, since they may be needed later during calls that result in rendered content.

Rendered content may be represented by boxes that may be temporarily stored internally in the renderers as partial box trees between their Enter and Leave calls. The rendered content is then passed on to the parent renderer by the RCR either as a tree or using a pointer to the tree. When the last renderer - the one for the root node of the ml tree - has performed its Leave operation, the output box tree of the layout engine is ready. It is also possible to store each part of the rendered content in the output box tree as soon as it is rendered.

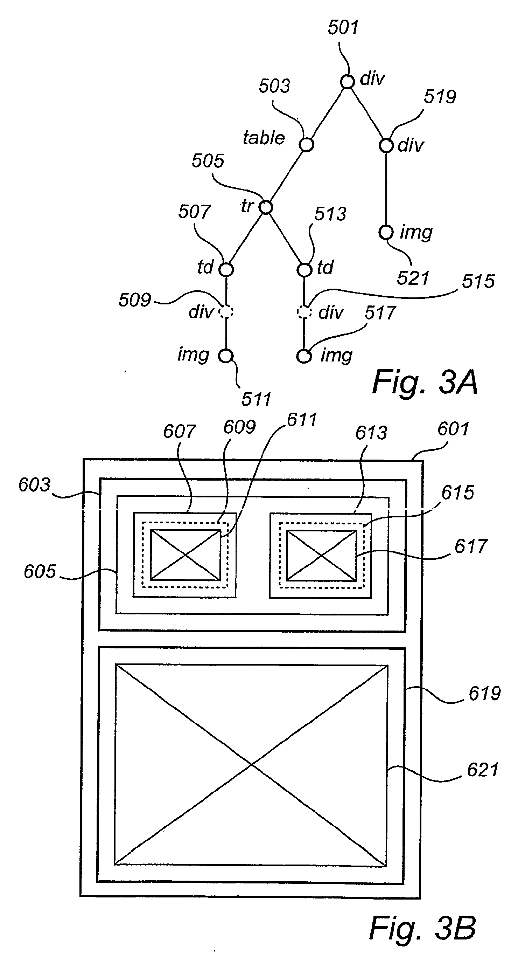

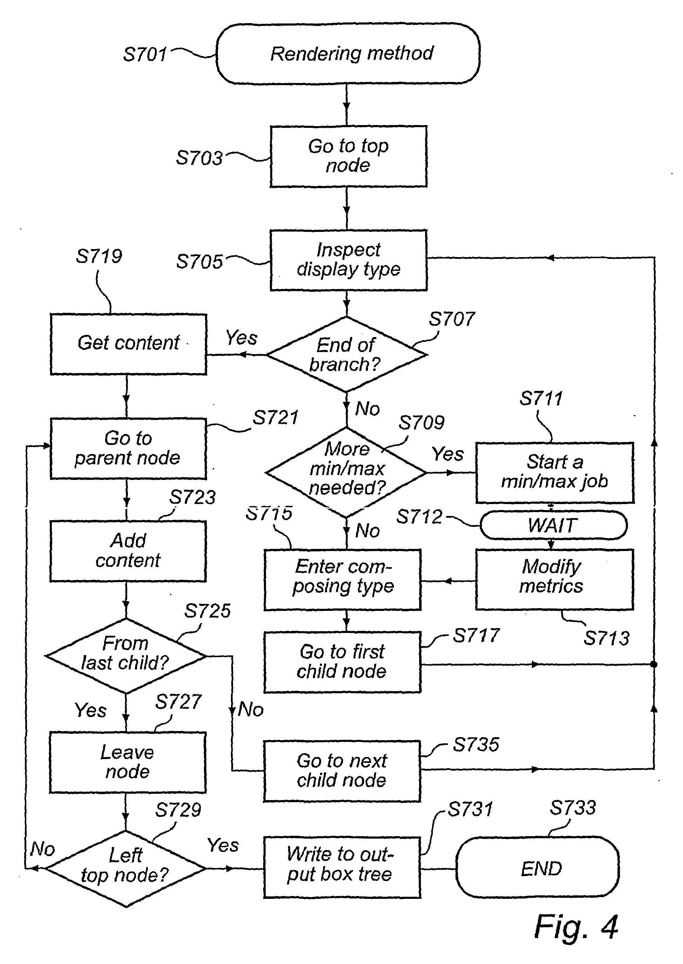

Referring to Fig. 3A, Fig. 3B and the flow chart of Fig. 4, a rendering method according to the invention will now be described in more detail.

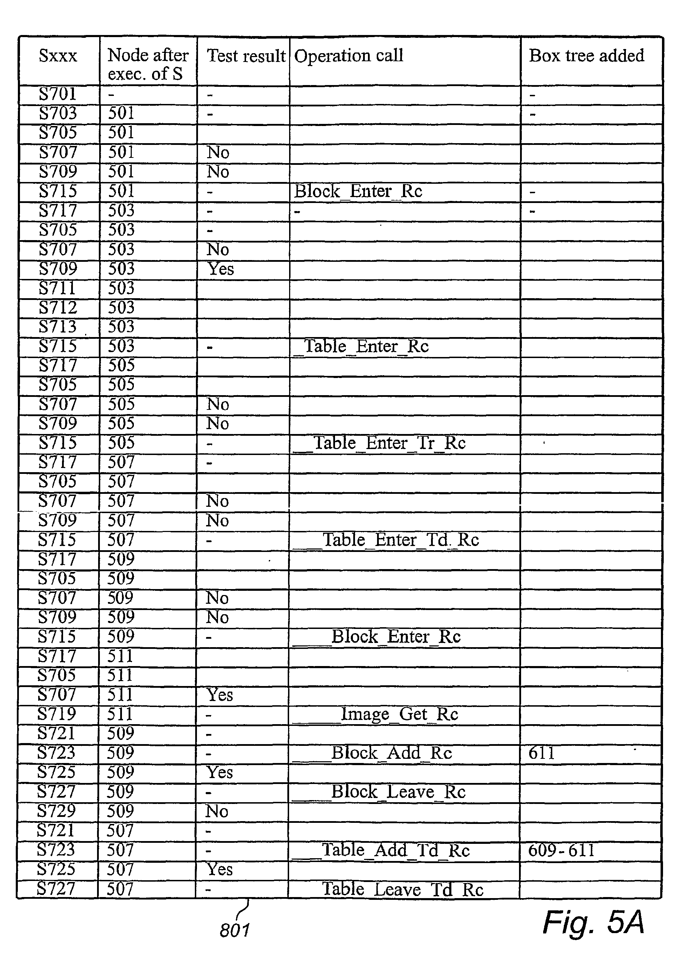

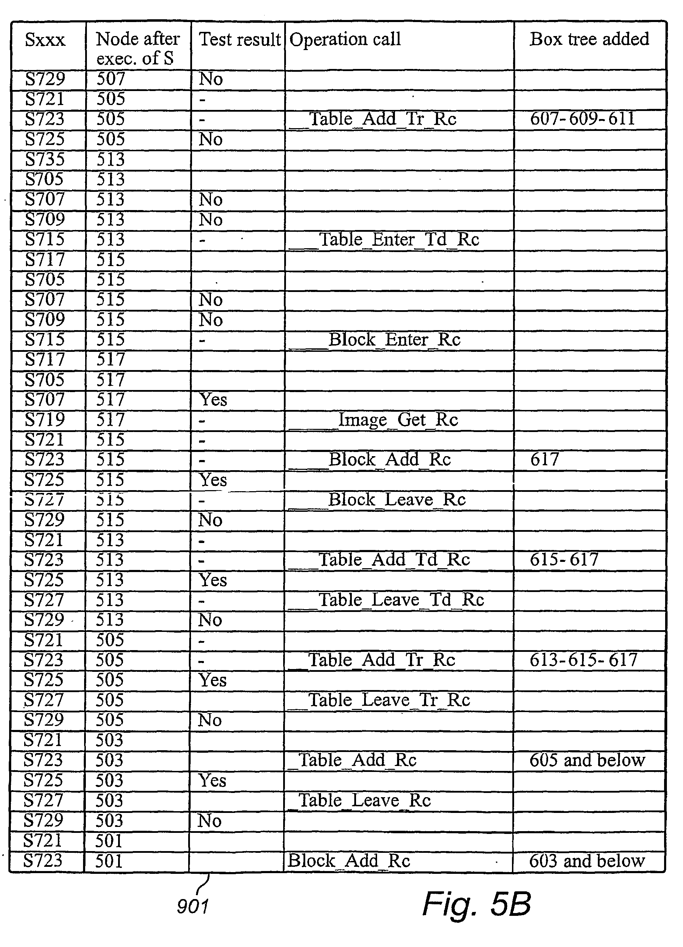

In order to present an overview, Fig. 5A and Fig. 5B include one table each that presents some of the most important data. The operation calls are presented using indents according to the level of the node in the tree.

Referring to Fig. 4, the rendering method begins at S701.

At S703 the top node of the ml tree or subtree is chosen as the current node. In Fig. 3A, the top node corresponds to node 501.

At S705 the display type of the current node is inspected. In the example in Fig. 3A, the display type of the current node being the top node is "div", which means block.

At S707 the method evaluates the test to "No" and proceeds to S709, where it evaluates the new test to "No", since block does not require any min/max information at all.

At S715, the method is to perform an Enter operation for a composing type that corresponds to the display type. Since the RCR is still at 501 of Fig. 3A, it calls Block_Enter_Rc, where Rc is an abbreviation for Rendered content. In general, the metrics of a node is sent by the RCR to an Enter operation and is then adjusted, by the composing renderer that implements the Enter operation, according to margin, border and padding for block. The RCR may then get the adjusted metrics back from the renderer so that the RCR is able to supply the next Enter operation with the correct metrics.

The method proceeds to S717, which results in that the RCR goes to the first child of node 501, which is node 503.

The method then arrives at S705, where the display type of node 503 is inspected.

At S707 the test is evaluated to "No", but the test at S709 evaluates to "Yes".

Therefore the method starts a min/max job at S711 and waits at S712 for the completion of that job. The method performing the min/max job is described separately below.

When the min/max job is completed, the method is able to continue at S713, where it modifies the metrics using the results from the min/max job, which are already stored in the nodes of the ml tree.

At S715, the method is able to call Table_Ente_Rc with the correct metrics.

The method proceeds to S717, which this time results in that the RCR goes to node 505.

At S705, the display type of node 505 is inspected. After one "No" at S707 and another "No" at S709, a Table_Enter_Tr_Rc operation is called at S715.

The RCR then, at S717, goes to the first child node of node 505, which is node 507.

In a similar way the method goes on looping and a Table_Enter_Td_Rc operation is performed, followed by that the RCR goes to node 509.

Next, an anonymous block is created by using, for example, a Block_Enter_Rc call with a special parameter value. When the composing renderer that implements Block_Enter_Rc, finds the special value it uses zeros for margin, border and padding.

Then the RCR, at S717, arrives at node 511, and the next time that the test of S707 is evaluated, it evaluates to "Yes" for the first time for the tree of Fig. 3A.

The method then proceeds to S719, where the RCR calls an Image_Get_Rc operation and temporarily stores the resulting rendered content, which is the box, 611, of Fig. 3B, somewhere.

Then, at S721, the RCR goes to the parent node of node 511, which is 509.

At S723 the RCR adds the recently rendered content from the Image_Get_Rc operation to the node 509 using a Block_Add_Rc operation.

Thereafter, at S725, the method finds out that the added content came from node 511 and that node 511 was the last child of node 509, resulting in that the method proceeds to S727, where the RCR calls a Block_Leave_Rc operation in order to leave node 509. The composing renderer implementing that operation will returns a box tree consisting of the boxes 611 and 609.

The method then performs S729 and goes to S721 resulting in that the RCR goes to node 507.

At S723, the RCR calls a Table_Add_Td_Rc operation.

At S725 the method finds out that all the children of node 507 have been evaluated, so at S727 the RCR calls a Table_Leave_Td_Rc operation.

At S721 the RCR goes to node 505 and at S723 the most recent rendered content is added using a Table_Add_Tr_Rc operation.

At S725 it is then found out that node 507 was not the last child of its parent 505, so the method proceeds to S735, where the RCR goes to the next child node of node 505, which is node 513. The method then handles the branch 513-515-517 in a similar way.

The next time a Table_Add_Tr_Rc operation has been performed and the method evaluates the test at S725, it finds out that all the children nodes of node 505 have been evaluated.

Therefore the method proceeds to S727 and the RCR calls a Table_Leave_Tr_Rc operation. At S721 the RCR goes to node 503 and at S723 the recently rendered content is added using a Table_Add_Rc operation.

Since there are no more children of node 503 to evaluate, the method proceeds to S727, where a Table_Leave_Rc operation is called. The result of that Leave operation is input to the Block_Add_Rc operation which is called at S723 when the RCR is at node 501.

The handling of the branch 519-521 is similar but simpler and it not described.

When node 501 has been left, the test at S729 evaluates to "Yes", the final box tree is written to the output box tree at S731 and the rendering method comes to an end at S733.

In short, the method shown in the flow chart of Fig. 4 has two main loops. A first main loop is for going down the ml tree and consists of S705-S707-S709-S715-S717-S705. In that loop the RCR calls an Enter operation and goes to the first child node at a new lower level of the ml tree. As long as no more min/max information is needed, the first main loop goes on until, at S707, the first child node is at the end of a branch. Then the method, by passing trough S719, goes into the second main loop, which is for going up the ml tree again. That second main loop consists of S721-S723-S725-S727-S729-S721 and in that loop the RCR calls one Add operation and one Leave operation and goes to a parent node on a new higher level of the ml tree. The second main loop goes on until, at S725, the are other children nodes that have not been visited. Then the method, by passing through S735, goes into the first main loop and the RCR starts going down the ml tree along another path.

In the example describing the method of Fig. 4 for performing an ordinary rendering job, there was a need for a min/max job.

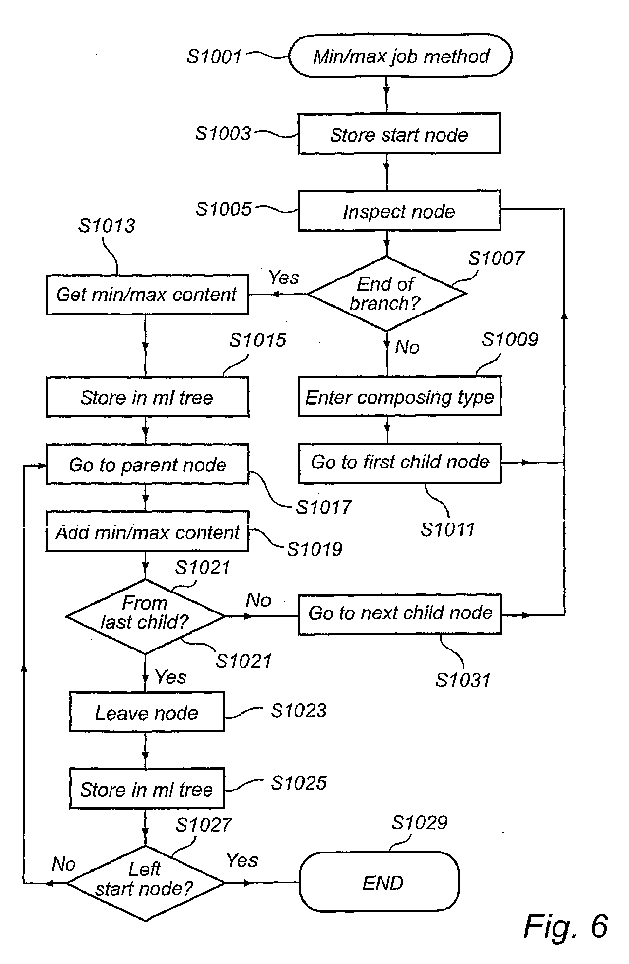

According to a preferred embodiment of the present invention, a method for performing a min/max job may be similar to the method of Fig. 4. Such a method for a min/max job may be performed according to the flow chart of Fig. 6 and it also has two main loops. A first main loop is for going down the ml tree and consists of S1005-S1007-S1009-S1011-S1005. In that loop the RCR calls an Enter operation and goes to the first child node at a new lower level of the ml tree. The first main loop goes on until, at S1007, the first child node is at the end of a branch. Then the method, by passing trough S1013, goes into the second main loop, which is for going up the ml tree again. That second main loop consists of S1017-S1019-S1021-S1023-S1025-S1027-S1017 and in that loop the RCR calls one Add operation and one Leave operation and goes to a parent node on a new higher level of the ml tree. The second main loop goes on until, at S1021, the are other children nodes that have not been visited. Then the method, by passing through S1031, goes into the first main loop and the RCR starts going down the ml tree along another path.

There are at least two significant differences between the methods of Fig.4 and Fig.6. A first difference is that the method of Fig.4 works with rendered content, while the method of Fig. 6 works with min/max content. A second difference is that in the method of Fig. 6 it is shown that, at S1015 and at S1025, min/max information is stored in the ml tree as soon as it is calculated or else it would may be lost in the next Leave operation. It is possible to store rendered content as soon as it is rendered but it is not necessary.

The method of Fig. 6 always goes through all the nodes in the sub-tree that it was ordered to process. By doing so, the min/max job calculates the min/max information for all nodes of the actual sub-tree. If there had been additional tables nested inside the table of node 503, the min/max information calculated during the min/max job would have been available, in the ml tree, to the RCR. The RCR would therefore have been able to supply the Enter operations needed with the correct metrics without starting any new min/max jobs.

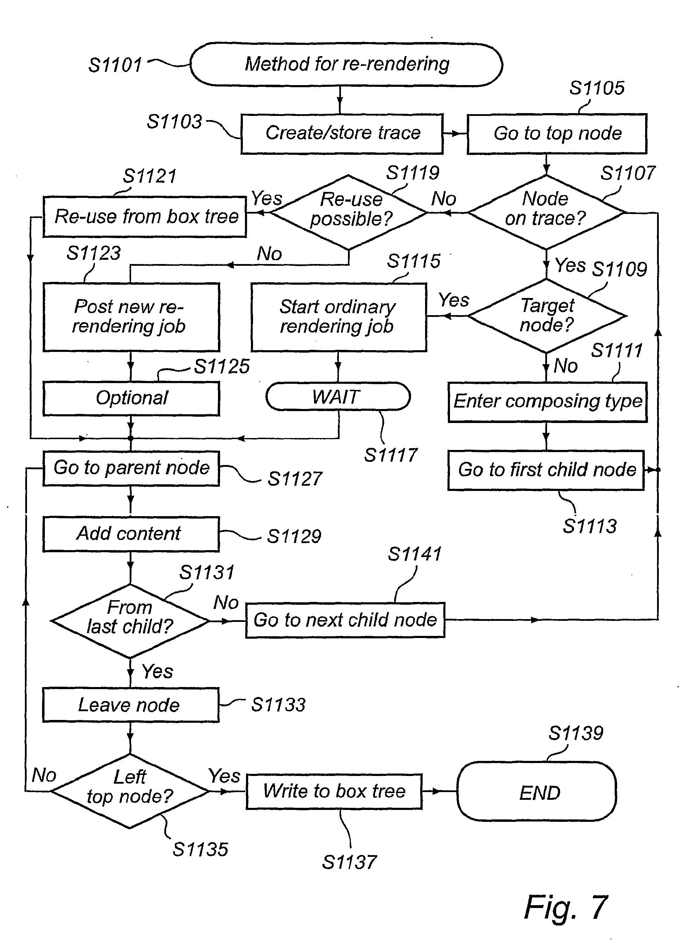

In a preferred embodiment according to the present invention, a method for performing a re-rendering job may be rather similar to both the method of Fig.4 - the one for performing an ordinary rendering job - and the method of Fig.6 - the one for performing a min/max job. The goal of such a method may be to re-use as much as possible and to go down the ml tree in two limited areas only. The first area is a narrow way, which.may be called a trace, that goes from the top node to the target node - a node that is the top node of the sub-tree that is going to be re-rendered. The reason for going along the trace is to call enter operations along the way to allow for the new content from the re-rendered sub-tree to be added later on the way up. The trace is created as a part of the re-rendering method by going from the target node up to the top node. The second limited area is simply the sub-tree which has the target node as its top node. Such a re-rendering method may be performed according to the flow chart of Fig. 7 and it again has two main loops. A first main loop is for going down the ml tree along the trace and consists of S1107-S1009-S1111-S1113-S1107. In that loop the RCR calls an Enter operation and goes to the first child node at a new lower level of the ml tree. The first loop goes on until the RCR, at S1107, finds a node that is not on the trace or until the RCR, at S1115, finds the target node. Then the method, by passing trough a re-use path S1119-S1121/S1119-S1123-S1125 or by passing through a rendering path S1115-S1117, goes into the second main loop, which is for going up the ml tree again. That second main loop consists of S1127-S1129-S1131-S1133-S1135-S1127 and in that loop the RCR calls one Add operation and one Leave operation and goes to a parent node on a new higher level of the ml tree. The second loop goes on until, at S1131, there are other children nodes that have not been visited. Then the method, by passing through S1141, goes into the first main loop. There the RCR either starts going down the tree along the trace again or immediately comes back to the second main loop through the re-use path or the rendering path.

The re-use path S1119-S1121/S1119-S1123-S1125 may be implemented in different ways. The most simple implementation to use is if it possible to re-use all kinds of composing types. That will be assumed when describing the re-use path of Fig. 7 below.

However, in an example it is only possible to re-use for the block types. That is the reason for the possible insertion of anonymous blocks directly under table cells in the example in Fig. 3A.

In general, a composition renderer that implements a composing operation may be ordered by the RCR to re-flow its old rendered content with whatever new metrics that is given. The RCR also provides the composing renderer with the information needed like min/max information from a previous rendering job and the relevant parts of the output box tree from a previous rendering job. Since the RCR is not executing any composing type logic, the composing renderer checks, according to the logic of the actual composing type, if it is possible to re-use without performing, for example, any new min/max jobs. If it is possible, the renderer does so at S1121 and the method may proceed to S1127. If re-use is not possible, like when a min/max-condition is no longer fulfilled, the composing renderer in question posts a re-flow notification at S1123 to the RCR and may also, at S1125, perform an optional re-use operation, which may correspond to re-using the old box tree although it does not fit perfectly with the new conditions, may be performed.

The steps from S1119 until S1121/S1127 are preferably composing renderer internal.

The rendering path S1115-S1117 is quite simple. Everything below the target node is to be re-rendered, so the RCR starts an ordinary rendering job with the top node being the target node. This means that the RCR pauses the re-rendering method at S1117, while it is performing the ordinary rendering job.

For example, if node 521 of Fig. 3A has been changed, for example when the image of node 517 finally has arrived from a web server over a slow connection, node 517 may be the target node of a re-rendering job. However, the target node does not have to be at the end of a branch of the ml tree. At S1103, the re-rendering method of a preferred embodiment of the present invention will create a trace from the target node to the top node, 501. The resulting trace will be 517-515-513-505-503-501, which may stored on a stack with 501 being at the top of the stack and 515, which will be used last, at the lower end of the stack.

At S1105, the RCR goes to the top node, 501. At S1107, the RCR finds out that node 501 is on the trace and therefore the method proceeds to S1109. Since node 501 is not the target, the method proceeds to S1111, where the RCR performs a Block_Enter_Rc operation, followed by that the RCR, at S1113, goes to node 503. In a similar way, the RCR proceeds to node 505, which is also on the trace, but when the method arrives at S1107 and the node is 507, node 507 is not on the trace. The method therefore tests, at S1119, if re-use is possible and takes actions like described above.

When the method arrives at S1127, it enters the second main loop and loops until, at S1131, it is found out that node 505 has other children that just node 507. The method proceeds through S1141, where the RCR goes to node 513, and into the first main loop again. This time the method stays in the first main loop, passing 513-515, until, when the node is 517, it is found out, at S1109, that the target node has been found. Then the method goes to S1115, where an ordinary rendering job with the top node set to the target node of the re-rendering job. In this case the target node represents a single node, but generally it may represent a whole sub-tree of its own. After waiting at S1117 for the ordinary rendering job to complete, the method proceeds to S1127, and into the second main loop. It stays in the second main loop until it has moved up through the tree on the path 517-515-513-505-503 to 501 and when it, at S1131, is found that node 501 has other children than just node 503. The method proceeds through S1141, where the RCR goes to node 519, and touches the first main loop at S1107, but goes to S1119, since node 519 is not on the trace. The method then tests if re-use is possible and takes actions like described above. The method then arrived at S1127 and stays in the second main loop until the top node 501 has been left and then the method proceeds through S1137 to its end at SS139.

The increase in computational efficiency that is gained when using the re-rendering method of Fig. 7 depends, for example, on how much of the old box tree that may be re-used and on many new re-rendering jobs that are posted during the execution of the re-rendering job and further on.

It may be necessary to start new min/max jobs during a re-rendering job but, since min/max jobs have been described separately, that combination is not described here.

Although the invention relates to the inside the layout engine and does not necessarily affect the interfaces of the layout engine, the invention may still lead to simplifications in the design of the parser.

The present invention may lead to faster rendering which leads to faster translations and/or faster re-translations of ml documents.

The present invention may also make it easier to render display types like inline block and inline table, which may result in that such display types can be allowed for additional devices.

When such display types are allowed by the layout engine, it also leads to simplifications in the parser, which no longer has to check that the ml trees it generates can be rendered by the layout engine.

It is possible to use composing types nested in an arbitrary way. The handling of the display types of inline text and inline block do not have to differ from the perspective of the renderer performing the inline composing operations. The RCR handles the calling of the composing operations that are needed as well as the order of the calls. The at least one composing renderer handles temporary stacking of boxes while waiting for the result of other calls concerned with nodes being lower down in the ml tree.

Local focus, easier code to develop and maintain, lower risk for bugs spreading. Due to the modular buildup using primitive renderer, composing renderer and RCR, maintenance and modifications of the browser in general and the layout engine in particular is simplified.

If right-to-left rendering is to be added to the capabilities of a layout engine according to the invention, only those renderers that are affected by right-to-left rendering have to be modified. The inline renderer and the primitive renderer for text may be the ones most affected, while the other renderers may only need smaller changes. The modifications are made inside each affected renderer. The information telling the renderers when to render left-to-right or right-to-left is given by the style sheet. The RCR does not need to know about it so it does not have to be modified at all.

The recursive methods of a layout engine according to the invention may lead to a significant reduction of the program memory needed for storing the program code of the layout engine.

It is assumed that the RCR is notified from outside (what nodes in the markup language tree and types of changes) when there are changes in the ml tree. The notifications from outside as well as possible self-notifications may be stored in a queue. The RCR may find queue entries that preferably are handled during the same re-flow instead of in sequential re-flows. An example is that if a specific node has n children and all the n children need re-flow, it may be more efficient to re-flow the specific node itself.

The RCR may also perform other things like storing the size of frequently retrieved images in a small cache somewhere on the device or close to the device, so that the layout engine does not necessarily have to re-flow the ml tree when the image and its intrinsic size data arrive.

The task for a layout engine may be to render the html tree into an output box tree. However, the invention may also be useful for a browser that does not use separate html trees and/or box trees. For example, a combined html/box tree may be used or the browser may use a combined parser/layout engine.

The methods are also applicable to any subpart of an ml tree, which is useful when parts of a page shall be rendered with absolute position and other parts have to be handled separately.

A number of other optimizations of the layout engine may be possible independently of the present invention.

Although the methods are described in separate flow charts, it may be possible to combine the implementations of two or more of the methods for ordinary rendering jobs, min/max jobs and re-rendering jobs.

Not all details are given, for example like how to do the "book keeping" of all the boxes and/or all the composing renderers that may be in operation at the same time or how to implement the notification stack. The person skilled in the art is assumed to be able to use the invention anyway and to adapt it to an ml tree, a box tree and the primitive renderers of a specific browser and/or device.

The border between what is implemented in the RCR and in the renderers does not have to be like described above, i.e. parts of the methods that are described to be performed by the RCR may be performed by a renderer and vice versa.

## Claims

1. A method in a display system, having a display (117), for rendering a compound graphical object, described by a markup language, ML, document and a style sheet, and comprising primitive content,
- wherein, by means of a parser (205), a structured document, corresponding to the ML document, is created, the structured document defining an hierarchical relationship between pieces of primitive content in the ML document as a tree of inter-related nodes, the tree having a top node (501), and,
- by means of a layout engine (207) and based on the structured document and said style sheet, a geometric document is created, the geometric document defining areas on said display to be covered by the pieces of primitive content, which jointly form the compound graphical object, wherein:
- the layout engine, in a metrics defining process, recursively traverses the tree of the structured document, such that, based on said style sheet and properties for the nodes, metrics for the nodes are defined, wherein
- the layout engine tests (S709) the nodes to determine whether a current node has a layout surface competing, LSC, property, wherein the LSC property is a minimum / maximum property and to determine whether the current node has an LSC property the layout engine determines whether there is a need for minimum / maximum information in order to find suitable metrics for the node by comparing the display type of the node with a list of display types;
- if the current node has an LSC property,
- the metrics defining process is interrupted, -the layout engine, in an LSC job process, recursively traverses (S711) the sub-tree of the current node to define metrics ranges for nodes in the sub tree, and
- the metrics defining process is resumed, wherein the metrics ranges for the nodes in the sub- tree are used (S713).

2. A method according to claim 1, wherein the structured document is a document object model, DOM, tree.

3. A method according to claim 1 or 2, wherein the geometric document is a box tree.

4. A method according to any of the preceding claims, wherein the layout engine, in the metrics defining process, traverses the tree of the structured document starting (S703) from the top node using a first main loop (S705-S707-S709-S715-S717-S705) and a second main loop (S721-S723-S725-S727-S729-S721), wherein, in the first main loop an enter operation (S715) is carried out for a node, whereby the metrics for that node may be adjusted, and the layout engine proceeds (S717) to a child node, and in the second main loop the layout engine gets (S719, S727) content for a node, proceeds (S721) to its parent node, and adds (S723) the content to the parent node.

5. A method according to claim 4, wherein, when the layout engine gets (S719, S727) said content, said content is temporarily stored.

6. A method according to any of the preceding claims, wherein the layout engine-, in a subsequent re- rendering process where content corresponding to a target node in the structured document tree is to be updated, creates and stores a trace from the target node to the top node; in a first re-rendering loop, follows the trace from the top node to the target node and carries out enter operations (SIIII) for nodes on the trace, repeats (S1115) the metrics defining process, with the target node acting as a top node; and follows the trace from the target node to the top node, while adding content of child nodes on the trace to their parent nodes.

7. Arrangement in a display system, having a display (117), for rendering a compound graphical object, described by a markup language, ML, document and a style sheet, and comprising primitive content,
- wherein, by means of a parser (205), a structured document, corresponding to the ML document, is created, the structured document defining an hierarchical relationship between pieces of primitive content in the ML document as a tree of inter-related nodes, the tree having a top node, and,
- by means of a layout engine (207) and based on the structured document and said style sheet, a geometric document is created, the geometric document defining areas on said display to be covered by the pieces of primitive content, which jointly form the compound graphical object, the arrangement comprising
- means in the layout engine for, in a metrics defining process, recursively traversing the tree of the structured document, such that, based on said style sheet and properties for the nodes, metrics for the nodes is defined, wherein
- the layout engine is arranged to test the nodes to determine whether a current node has a layout surface competing, LSC, property
- the layout engine is arranged, if the current node has an LSC property,
- to interrupt the metrics defining process,
- to recursively traverse, in an LSC job process, the sub-tree of the current node to define metrics ranges for nodes in the sub tree, and
- to resume the metrics defining process, wherein the metrics ranges for the nodes in the subtree are used.
- wherein the LSC property is a minimum / maximum property and to determine whether the current node has an LSC property the layout engine is arranged to determine whether there is a need for minimum / maximum information in order to find suitable metrics for the node by comparing the display type of the node with a list of display types.

8. Computer program for rendering, in a display system having a display, a compound graphical object, described by a markup language, ML, document and a style sheet, and comprising primitive content,
- wherein, by means of a parser, a structured document, corresponding to the ML document, is created, the structured document defining an hierarchical relationship between pieces of primitive content in the ML document as a tree of inter-related nodes, the tree having a top node, and,
- by means of a layout engine and based on the structured document and said style sheet, a geometric document is created, the geometric document defining areas on said display to be covered by the pieces of primitive content, which jointly form the compound graphical object, the computer program comprising instructions such that:
- the layout engine, in a metrics defining process, recursively traverses the tree of the structured document, such that, based on said style sheet and properties for the nodes, metrics for the nodes is defined, wherein
- the layout engine tests the nodes to determine whether a current node has a layout surface competing, LSC, property,
- if the current node has an LSC property,
- the metrics defining process is interrupted, -the layout engine, in an LSC job process, recursively traverses the sub-tree of the current node to define metrics ranges for nodes in the sub tree, and
- the metrics defining process is resumed, wherein the metrics ranges for the nodes in the sub-tree are used.
wherein the LSC property is a minimum / maximum property and to determine whether the current node has an LSC property the layout engine determines whether there is a need for minimum / maximum information in order to find suitable metrics for the node by comparing the display type of the node with a list of display types.

9. A digital storage medium comprising a computer program as claimed in claim 8.

## Patentansprüche

1. Verfahren in einem Display-System mit einem Display (117) zum Rendern eines zusammengesetzten graphischen Objekts, das durch ein Markup-Language(ML)-Dokument und ein Stylesheet beschrieben ist und primitiven Inhalt umfasst,
- wobei mittels eines Parsers (205) ein strukturiertes Dokument, das dem ML-Dokument entspricht, gebildet wird, wobei das strukturierte Dokument eine hierarchische Beziehung zwischen Elementen des primitiven Inhalts im ML-Dokument als Baum von miteinander verknüpften Knoten definiert, wobei der Baum einen oberen Knoten (501) aufweist, und
- mittels einer Layout-Maschine (207) und auf Basis des strukturierten Dokuments und des Stylesheets ein geometrisches Dokument gebildet wird, wobei das geometrische Dokument Bereiche auf dem Display definiert, die von den Elementen des primitiven Inhalts abzudecken sind, die gemeinsam das zusammengesetzte graphische Objekt bilden, wobei:
- die Layout-Maschine in einem Metrikdefinitionsprozess den Baum des strukturierten Dokuments derart rekursiv durchläuft, dass basierend auf dem Stylesheet und Eigenschaften für die Knoten eine Metrik für die Knoten definiert wird, wobei
- die Layout-Maschine die Knoten prüft (S709), um zu bestimmen, ob ein vorliegender Knoten eine Layout-Surface-Competing(LSC)-Eigenschaft aufweist, wobei die LSC-Eigenschaft eine Minimum-/Maximum-Eigenschaft ist, und, um zu bestimmen, ob der vorliegende Knoten eine LSC-Eigenschaft aufweist, bestimmt die Layout-Maschine, ob eine Notwendigkeit für Minimum-/Maximum-Informationen besteht, um eine geeignete Metrik für den Knoten zu finden, indem der Displaytyp des Knotens mit einer Liste von Displaytypen verglichen wird;
- wenn der vorliegende Knoten eine LSC-Eigenschaft aufweist,
- wird der Metrikdefinitionsprozess unterbrochen,
- die Layout-Maschine durchläuft den Teilbaum des vorliegenden Knotens rekursiv (S711) in einem LSC-Bearbeitungsprozess, um Metrikbereiche für Knoten in dem Teilbaum zu definieren, und
- der Metrikdefinitionsprozess wird fortgesetzt, wobei die Metrikbereiche für die Knoten in dem Teilbaum verwendet werden (S713).

2. Verfahren nach Anspruch 1, wobei das strukturierte Dokument ein Dokument-Objekt-Modell(DOM)-Baum ist.

3. Verfahren nach Anspruch 1 oder 2, wobei das geometrische Dokument ein Box-Baum ist.

4. Verfahren nach einem der vorhergehenden Ansprüche, wobei die Layout-Maschine im Metrikdefinitionsprozess den Baum des strukturierten Dokuments ausgehend vom oberen Knoten durchläuft (S703), wobei eine erste Hauptschleife (S705-S707-S709-S715-S717-S705) und eine zweite Hauptschleife (S721-S723-S725-S727-S729-S721) verwendet werden, wobei in der ersten Hauptschleife eine Enter-Operation (S715) für einen Knoten ausgeführt wird, wodurch die Metrik für diesen Knoten eingestellt werden kann, und die Layout-Maschine zu einem Kindknoten übergeht (S717) und in der zweiten Hauptschleife die Layout-Maschine Inhalt für einen Knoten erhält (S719, S727), zu seinem Elternknoten übergeht (S721) und den Inhalt zum Elternknoten addiert (S723).

5. Verfahren nach Anspruch 4, wobei, wenn die Layout-Maschine den Inhalt erhält (S719, S727), dieser Inhalt vorübergehend gespeichert wird.

6. Verfahren nach einem der vorhergehenden Ansprüche, wobei die Layout-Maschine in einem anschließenden Rerender-Prozess, in dem Inhalt, der einem Zielknoten in dem Baum des strukturierten Dokuments zugeordnet ist, zu aktualisieren ist, eine Spur von dem Zielknoten zum oberen Knoten bildet und speichert, in einer ersten Rerender-Schleife der Spur vom oberen Knoten zum Zielknoten folgt und Enter-Operationen (SIIII) für Knoten auf der Spur ausführt, den Metrikdefinitionsprozess wiederholt (S1115), wobei der Zielknoten als oberer Knoten dient, und der Spur vom Zielknoten zum oberen Knoten folgt, während Inhalt von Kindknoten auf der Spur zu ihren Elternknoten addiert wird.

7. Anordnung in einem Display-System mit einem Display (117) zum Rendern eines zusammengesetzten graphischen Objekts, das durch ein Markup-Language(ML)-Dokument und ein Stylesheet beschrieben ist und primitiven Inhalt umfasst,
- wobei mittels eines Parsers (205) ein strukturiertes Dokument, das dem ML-Dokument entspricht, gebildet wird, wobei das strukturierte Dokument eine hierarchische Beziehung zwischen Elementen des primitiven Inhalts im ML-Dokument als Baum von miteinander verknüpften Knoten definiert, wobei der Baum einen oberen Knoten aufweist, und
- mittels einer Layout-Maschine (207) und auf Basis des strukturierten Dokuments und des Stylesheets ein geometrisches Dokument gebildet wird, wobei das geometrische Dokument Bereiche auf dem Display definiert, die von den Elementen des primitiven Inhalts abzudecken sind, die gemeinsam das zusammengesetzte graphische Objekt bilden, wobei die Anordnung umfasst:
- Mittel in der Layout-Maschine, so dass in einem Metrikdefinitionsprozess der Baum des strukturierten Dokuments derart rekursiv durchlaufen wird, dass basierend auf dem Stylesheet und Eigenschaften für die Knoten eine Metrik für die Knoten definiert wird, wobei
- die Layout-Maschine dazu ausgebildet ist, dass sie die Knoten prüft, um zu bestimmen, ob ein vorliegender Knoten eine Layout-Surface-Competing(LSC)-Eigenschaft aufweist,
- die Layout-Maschine dazu ausgebildet ist, dass sie, wenn der vorliegende Knoten eine LSC-Eigenschaft aufweist,
- den Metrikdefinitionsprozess unterbricht,
- den Teilbaum des vorliegenden Knotens in einem LSC-Bearbeitungsprozess rekursiv durchläuft, um Metrikbereiche für Knoten in dem Teilbaum zu definieren, und
- den Metrikdefinitionsprozess fortsetzt, wobei die Metrikbereiche für die Knoten in dem Teilbaum verwendet werden,
- wobei die LSC-Eigenschaft eine Minimum-/Maximum-Eigenschaft ist, und, um zu bestimmen, ob der vorliegende Knoten eine LSC-Eigenschaft aufweist, ist die Layout-Maschine dazu ausgebildet, dass sie bestimmt, ob eine Notwendigkeit für Minimum-/Maximum-Informationen besteht, um eine geeignete Metrik für den Knoten zu finden, indem der Displaytyp des Knotens mit einer Liste von Displaytypen verglichen wird.

8. Computerprogramm zum Rendern eines zusammengesetzten graphischen Objekts, das durch ein Markup-Language(ML)-Dokument und ein Stylesheet beschrieben ist und primitiven Inhalt umfasst, in einem Display-System mit einem Display,
- wobei mittels eines Parsers ein strukturiertes Dokument, das dem ML-Dokument zugeordnet ist, gebildet wird, wobei das strukturierte Dokument eine hierarchische Beziehung zwischen Elementen des primitiven Inhalts im ML-Dokument als Baum von miteinander verknüpften Knoten definiert, wobei der Baum einen oberen Knoten aufweist, und
- mittels einer Layout-Maschine und auf Basis des strukturierten Dokuments und des Stylesheets ein geometrisches Dokument gebildet wird, wobei das geometrische Dokument Bereiche auf dem Display definiert, die von den Elementen des primitiven Inhalts abzudecken sind, die gemeinsam das zusammengesetzte graphische Objekt bilden, wobei das Computerprogramm Befehle umfasst, so dass:
- die Layout-Maschine in einem Metrikdefinitionsprozess den Baum des strukturierten Dokuments derart rekursiv durchläuft, dass basierend auf dem Stylesheet und Eigenschaften für die Knoten eine Metrik für die Knoten definiert wird, wobei
- die Layout-Maschine die Knoten prüft, um zu bestimmen, ob ein vorliegender Knoten eine Layout-Surface-Competing(LSC)-Eigenschaft aufweist,
- wenn der vorliegende Knoten eine LSC-Eigenschaft aufweist,
- der Metrikdefinitionsprozess unterbrochen wird,
- die Layout-Maschine in einem LSC-Bearbeitungsprozess den Teilbaum des vorliegenden Knotens rekursiv durchläuft, um Metrikbereiche für Knoten in dem Teilbaum zu definieren, und
- der Nietrikdefinitionsprozess fortgesetzt wird, wobei die Metrikbereiche für die Knoten in dem Teilbaum verwendet werden, wobei die LSC-Eigenschaft eine Minimum-/Maximum-Eigenschaft ist, und, um zu bestimmen, ob der vorliegende Knoten eine LSC-Eigenschaft aufweist, bestimmt die Layout-Maschine, ob eine Notwendigkeit für Minimum-/Maximum-Informationen besteht, um eine geeignete Metrik für den Knoten zu finden, indem der Displaytyp des Knotens mit einer Liste von Displaytypen verglichen wird.

9. Digitales Speichermedium umfassend ein Computerprogramm, wie es in Anspruch 8 beansprucht ist.

## Revendications

1. Procédé dans un système d'affichage, comportant un afficheur (117), pour rendre un objet graphique composé, décrit par un document de langage de balisage, ML, et une feuille de style, et comprenant un contenu primitif,
- dans lequel, au moyen d'un analyseur syntaxique (205), un document structuré, correspondant au document ML, est créé, le document structuré définissant une relation hiérarchique entre des parties de contenu primitif dans le document ML sous forme d'arborescence de noeuds interdépendants, l'arborescence ayant un noeud supérieur (501), et
- au moyen d'un moteur de présentation (207) et en fonction du document structuré et de ladite feuille de style, un document géométrique est créé, le document géométrique définissant sur ledit afficheur des zones destinées à être couvertes par les parties de contenu primitif, lesquelles forment ensemble l'objet graphique composé, dans lequel :
- le moteur de présentation, dans un processus de définition de métriques, traverse récursivement l'arborescence du document structuré, de telle sorte que, en fonction de ladite feuille de style et de propriétés des noeuds, des métriques des noeuds soient définies, dans lequel
- le moteur de présentation teste (S709) les noeuds pour déterminer si un noeud courant possède ou non une propriété LSC (layout surface competing ou concurrence pour surface de présentation), la propriété LSC étant une propriété de minimum / maximum et pour déterminer si le noeud courant possède ou non une propriété LSC le moteur de présentation détermine si des informations de minimum / maximum sont nécessaires ou non pour trouver des métriques convenables pour le noeud en comparant le type d'affichage du noeud à une liste de types d'affichage ;
- si le noeud courant possède une propriété LSC,
- le processus de définition de métriques est interrompu,
- le moteur de présentation, dans un processus de tâche LSC, traverse récursivement (S711) la sous-arborescence du noeud courant pour définir des plages de métriques pour les noeuds se trouvant dans la sous-arborescence, et
- le processus de définition de métriques est relancé, les plages de métriques des noeuds se trouvant dans la sous-arborescence étant utilisées (S713).

2. Procédé selon la revendication 1, dans lequel le document structuré est une arborescence DOM (Document Object Model ou modèle objet de document).

3. Procédé selon la revendication 1 ou 2, dans lequel le document géométrique est une arborescence en boîte.

4. Procédé selon l'une quelconque des revendications précédentes, dans lequel le moteur de présentation, dans le processus de définition de métriques, traverse l'arborescence du document structuré en commençant (S703) au noeud supérieur en suivant une première boucle principale ((S705-S707-S709-S715-S717-S705) et une seconde boucle principale (S721-S723-S725-S727-S729-S721), où, dans la première boucle principale une opération de saisie (S715) est exécutée pour un noeud, la métrique de ce noeud pouvant être réglée, et le moteur de présentation passe (S717) à un noeud enfant, et dans la seconde boucle principale le moteur de présentation obtient (S719, S727) le contenu d'un noeud, passe (S721) à son noeud parent, et ajoute (S723) le contenu au noeud parent.

5. Procédé selon la revendication 4, dans lequel, quand le moteur de présentation obtient (S719, S727) ledit contenu, ledit contenu est mémorisé temporairement.

6. Procédé selon l'une quelconque des revendications précédentes, dans lequel le moteur de présentation, dans un processus de nouveau rendu suivant dans lequel le contenu correspondant à un noeud cible dans l'arborescence du document structuré doit être actualisé, crée et mémorise un tracé depuis le noeud cible jusqu'au noeud supérieur ; dans une première boucle de nouveau rendu, suit le tracé depuis le noeud supérieur jusqu'au noeud cible et exécute des opérations de saisie (S1111) pour les noeuds se trouvant sur le tracé, répète (S1115) le processus de définition de métriques, le noeud cible servant de noeud supérieur ; et suit le tracé depuis le noeud cible jusqu'au noeud supérieur, tout en ajoutant le contenu des noeuds enfants se trouvant sur le tracé à leurs noeuds parents.

7. Agencement dans un système d'affichage, comportant un afficheur (117), pour rendre un objet graphique composé, décrit par un document de langage de balisage, ML, et une feuille de style, et comprenant un contenu primitif,
- dans lequel, au moyen d'un analyseur syntaxique (205), un document structuré, correspondant au document ML, est créé, le document structuré définissant une relation hiérarchique entre des parties de contenu primitif dans le document ML sous forme d'arborescence de noeuds interdépendants, l'arborescence ayant un noeud supérieur, et
- au moyen d'un moteur de présentation (207) et en fonction du document structuré et de ladite feuille de style, un document géométrique est créé, le document géométrique définissant sur ledit afficheur des zones destinées à être couvertes par les parties du contenu primitif, lesquelles forment ensemble l'objet graphique composé, l'agencement comprenant :
- un moyen dans le moteur de présentation pour, dans un processus de définition de métriques, traverser récursivement l'arborescence du document structuré, de telle sorte que, en fonction de ladite feuille de style et de propriétés des noeuds, des métriques des noeuds soient définies, dans lequel
- le moteur de présentation est agencé pour tester les noeuds afin de déterminer si un noeud courant possède ou non une propriété LSC (layout surface competing ou concurrence pour surface de présentation)
- le moteur de présentation est agencé pour, si le noeud courant possède une propriété LSC,
- interrompre le processus de définition de métriques,
- traverser récursivement, dans un processus de tâche LSC, la sous-arborescence du noeud courant pour définir des plages de métriques pour les noeuds se trouvant dans la sous-arborescence, et
- relancer le processus de définition de métriques, les plages de métriques des noeuds se trouvant dans la sous-arborescence étant utilisées ;
- dans lequel la propriété LSC est une propriété de minimum / maximum et pour déterminer si le noeud courant possède ou non une propriété LSC le moteur de présentation est agencé pour déterminer si des informations de minimum / maximum sont nécessaires ou non pour trouver des métriques convenables pour le noeud en comparant le type d'affichage du noeud à une liste de types d'affichage

8. Programme informatique pour rendre, dans un système d'affichage comportant un afficheur, un objet graphique composé, décrit par un document de langage de balisage, ML, et une feuille de style, et comprenant un contenu primitif,
- dans lequel, au moyen d'un analyseur syntaxique, un document structuré, correspondant au document ML, est créé, le document structuré définissant une relation hiérarchique entre des parties de contenu primitif dans le document ML sous forme d'arborescence de noeuds interdépendants, l'arborescence ayant un noeud supérieur, et
- au moyen d'un moteur de présentation et en fonction du document structuré et de ladite feuille de style, un document géométrique est créé, le document géométrique définissant sur ledit afficheur des zones destinées à être couvertes par les parties de contenu primitif, lesquelles forment ensemble l'objet graphique composé, le programme informatique comprenant des instructions de telle sorte que :
- le moteur de présentation, dans un processus de définition de métriques, traverse récursivement l'arborescence du document structuré, de telle sorte que, en fonction de ladite feuille de style et de propriétés des noeuds, des métriques des noeuds soient définies, dans lequel
- le moteur de présentation teste les noeuds pour déterminer si un noeud courant possède ou non une propriété LSC (layout surface competing ou concurrence pour surface de présentation),
- si le noeud courant possède une propriété LSC,
- le processus de définition de métriques est interrompu,
- le moteur de présentation, dans un processus de tâche LSC, traverse récursivement la sous-arborescence du noeud courant pour définir des plages de métriques pour les noeuds se trouvant dans la sous-arborescence, et
- le processus de définition de métrique est relancé, les plages de métriques des noeuds se trouvant dans la sous-arborescence étant utilisées,
dans lequel la propriété LSC est une propriété de minimum / maximum et pour déterminer si le noeud courant possède ou non une propriété LSC le moteur de présentation détermine si des informations de minimum / maximum sont nécessaires ou non pour trouver des métriques convenables pour le noeud en comparant le type d'affichage du noeud à une liste de types d'affichage.

9. Support de mémorisation numérique comprenant un programme informatique selon la revendication 8.
